# EUROPÄISCHE PATENTSCHRIFT

(11) **EP 1 425 723 B1**
(45) Veröffentlichungstag und Bekanntmachung des Hinweises auf die Patenterteilung: **30.03.2005**
(21) Anmeldenummer: 02797549.9
(22) Anmeldetag: 27.08.2002
(51) Int. Cl.: G07F 7/10

(54) **INITIALISIEREN EINER CHIPKARTE**
INITIALIZATION OF A CHIP CARD
INITIALISATION D'UNE CARTE A PUCE

(30) Priorität: 30.08.2001 DE 10142351
(43) Veröffentlichungstag der Anmeldung: 09.06.2004
(73) Patentinhaber: Giesecke & Devrient GmbH, 81677 München (DE)
(72) Erfinder: HARTEL, Karl, Eglof, 80689 München (DE); VATER, Harald, 35398 Giessen (DE)
(74) Vertreter: Höhfeld, Jochen
(86) Internationale Anmeldenummer: PCT/EP2002/009561
(87) Internationale Veröffentlichungsnummer: WO 2003/021542

(56) Entgegenhaltungen:
- EP-A- 0 955 603
- EP-A- 0 973 135
- WO-A-98/52162
- DE-A- 3 523 237
- DE-A- 19 633 466

## Beschreibung

Die Erfindung betrifft das technische Gebiet der Initialisierung einer Chipkarte und insbesondere die Zusammenstellung und Verarbeitung eines Datensatzes, der bei einem Initialisierungsschritt in die Chipkarte eingelesen wird.

Chipkarten sind in vielerlei Ausgestaltungen gut bekannt. Sie werden beispielsweise zur Zugangskontrolle oder im Zahlungsverkehr eingesetzt und weisen in der Regel einen Halbleiterchip mit einem Mikrocontroller und mindestens einem Speicher auf. Neben den üblichen Bauformen in Scheckkartengröße oder als kleine Kartenmodule (z.B..SIMs - *subscriber identity modules* bei Mobiltelefonen) werden Chipkarten auch in anderen Bauformen (z.B. als Schlüsselanhänger oder Ringe) hergestellt. Alle diese Ausgestaltungen sollen im vorliegenden Text mit dem Begriff "Chipkarte" bezeichnet werden.

Bei der Herstellung von Chipkarten ist die Initialisierung derjenige Verfahrensschritt, bei dem nach der Fertigstellung und dem erfolgreichen Test der Chipkartenhardware solche Programme und/oder Daten in die Chipkarte eingespielt werden, die für eine größere Anzahl von Chipkarten identisch sind. Der daran anschließende Schritt des Ladens von personenbezogenen, individuellen Daten wird als Personalisierung bezeichnet.

Die Trennung der beiden genannten Schritte erfolgt aus fertigungstechnischen Gründen, um die Menge der individuell in einzelne Chipkarten zu übertragenden Daten möglichst gering zu halten. In manchen Anwendungsfällen ist zwischen die Schritte der Initialisierung und der Personalisierung noch die sogenannte Nachinitialisierung geschaltet, bei der zusätzliche Programme und/oder Daten in eine relativ kleine Anzahl von Chipkarten eingeschrieben werden. Ein Überblick über diese Herstellungsschritte und deren Abgrenzung ist in Kapitel 10.4 (Seiten 584 bis 592) des Buches "Handbuch der Chipkarten" von Wolfgang Rankl und Wolfgang Effing, 3. Auflage 1999, enthalten.

Nach einem zumindest firmeninternen Stand der Technik der Anmelderin ist in Chipkarten für das GSM-Mobiltelefonsystem ein 32 Byte langer Freigabeschlüssel in einem maskenprogrammierten ROM der Chipkarte enthalten. Zum Starten des Initialisierungsvorgangs muß ein zum Freigabeschlüssel passender Datenwert mit einem geeigneten Kommando (z.B. VERIFY INITIALISATION KEY) an die Chipkarte übergeben werden. Der übergebene Wert wird mit dem im Chipkarten-ROM gespeicherten Freigabeschlüssel verglichen. Bei einer Übereinstimmung wird der Zugriff auf ein EEPROM der Chipkarte und auf alle für die Initialisierung benötigten Chipkartenkommandos freigegeben.

Das darauffolgende Laden der Initialisierungsdaten in die Chipkarte kann entweder offen oder mit einem Ladeschlüssel verschlüsselt erfolgen. Durch das verschlüsselte Laden wird sichergestellt, daß auch bei einem unbefugten Zugriff auf die verschlüsselten Initialisierungsdaten deren Vertraulichkeit gewahrt bleibt.

Bei diesem System besteht jedoch nach wie vor das Problem, daß der Freigabeschlüssel derjenigen Stelle, die die Initialisierung durchführt, bekannt sein muß. Zunehmend wird gefordert, daß nicht der Chipkartenhersteller selber, sondern externe Partner (z.B. Mobiltelefon-Netzbetreiber) die Chipkarten in eigener Regie initialisieren. Es besteht in diesem Fall die Gefahr, daß der Freigabeschlüssel bei der Übermittlung zu dem externen Partner oder beim Einlesen in die Chipkarte ausgespäht wird, oder daß der externe Partner den Freigabeschlüssel nicht streng geheimhält.

Wenn der Freigabeschlüssel unberechtigten Personen zugänglich gemacht werden würde, könnte möglicherweise eine ganze Chipkarten-Produktlinie kompromittiert werden, weil der Freigabeschlüssel Zugriff zu diversen grundlegenden Chipkartenfunktionen ermöglicht, die ihrerseits zum Ausspähen der Hard- und Software der Chipkarte eingesetzt werden können. Beispielsweise könnte bei Kenntnis des Freigabeschlüssels ein unberechtigter Dritter eigenen Programmcode in die Chipkarte laden und damit den bereits im maskenprogrammierten ROM befindlichen Code ausspähen.

Aus der deutschen Offenlegungsschrift DE 196 33 466 A1 ist ein Verfahren zur Nachinitialisierung von Chipkarten bekannt. Bei diesem Verfahren wird, ähnlich der oben im Zusammenhang mit der Initialisierung beschriebenen Vorgehensweise, ein Schlüssel zur Freigabe bestimmter Kommandos des Chipkarten-Betriebssystems verwendet.

Die deutsche Offenlegungsschrift DE 199 02 722 A1 zeigt ein kryptographisches Verfahren zum Austauschen eines geheimen Anfangswerts zwischen einer Bearbeitungsstation und einer Chipkarte, bei dem eine Übermittlung des Anfangswerts im Klartext vermieden wird.

Aus der europäischen Offenlegungsschrift EP-A 0 955 603 ist ein Verfahren bekannt, mit dem zum Einlesen von Initialisierungsdaten ein Privatschlüssel des Kartenherstellers verschlüsselt an die Initialisierungsstelle geschickt wird. In der Chipkarte wird der entschlüsselte Privatschlüssel mit dem abgespeicherten Privatschlüssel verglichen und bei Übereinstimmung wird die Initialisierungsdaten erlaubt.

Aufgabe der Erfindung ist es, die genannten Probleme zumindest zum Teil zu vermeiden und eine Möglichkeit zur Initialisierung von Chipkarten bereitzustellen, die sich insbesondere für die Durchführung der Initialisierung durch externe Partner eignet und dabei nur wenige oder keine Angriffsmöglichkeiten bietet. Insbesondere soll das Risiko vermindert werden, daß ein Unbefugter Zugriff auf die geschützten Initialisierungskommandos erhält und/oder ein unbefugtes Laden von Programmcodes in die Chipkarte erfolgt.

Zur Lösung dieser Aufgabe sind erfindungsgemäß Verfahren und Vorrichtungen mit den Merkmalen der unabhängigen Ansprüche vorgesehen. Die abhängigen Ansprüche definieren bevorzugte Ausgestaltungen der Erfindung.

Anspruch 1 definiert die von der Chipkarte beim Einlesen des Initialisierungs-Datensatzes ausgeführten Schritte. Anspruch 4 betrifft eine Chipkarte, die zum Ausführen dieser Schritte ausgestaltet ist. Anspruch 5 definiert das vom Chipkartenhersteller ausgeführte Verfahren, um einen geeigneten Datensatz zur Ausführung der erfindungsgemäßen Chipkarteninitialisierung zu erhalten. Anspruch 8 betrifft einen computerlesbaren Datenträger mit einem derartigen Datensatz. Anspruch 9 betrifft das erfindungsgemäße Gesamtverfahren, das im wesentlichen aus den zwei "spiegelbildlichen" Abschnitten des Erzeugens und des Auswertens des Initialisierungs-Datensatzes zusammengesetzt ist.

Die Erfindung beruht auf der Grundidee, den Freigabeschlüssel weder im Klartext dem externen Partner zugänglich zu machen noch ihn im Klartext an die Chipkarte zu übertragen. Vielmehr wird der Freigabeschlüssel (gegebenenfalls zusammen mit weiteren Informationen) in einen Authentisierungswert aufgenommen, und der Authentisierungswert wird ausschließlich in verschlüsseltem Zustand vom Hersteller zum externen Partner und von einer Bearbeitungsstation des externen Partners zur Chipkarte übertragen.

Die Erfindung bietet erhebliche Vorteile dadurch, daß der Freigabeschlüssel im Klartext weder an den externen Partner noch an die Chipkarte übertragen wird und auch dem externen Partner nicht zugänglich ist. Dadurch wird ein unbefugter Zugang zu den Initialisierungskommandos der Chipkarte zuverlässig vermieden.

Die Sicherheit des gesamten Chipkartensystems, die auch auf der sicheren Geheimhaltung der internen Strukturen und internen Programmierung der Chipkarte beruht, wird damit erhöht, während gleichzeitig externen Partnern die Möglichkeit gegeben wird, Initialisierungsvorgänge im eigenen Hause auszuführen. Dies vergrößert die Akzeptanz des Chipkartensystems z.B. bei GSM-Netzbetreibern und erweitert den möglichen Anwendungsbereich von Chipkarten auch auf Einsatzgebiete, bei denen eine externe Initialisierung der Chipkarte erforderlich oder wünschenswert ist.

Die Aufzählungsreihenfolge der Schritte in den Ansprüchen soll nicht einschränkend aufgefaßt werden. Es sind vielmehr Ausführungsformen der Erfindung vorgesehen, in denen diese Schritte in anderer Reihenfolge oder parallel oder quasi-parallel (ineinander verzahnt) ausgeführt werden.

Als "computerlesbarer Datenträger" im hier verwendeten Sinne sollen nicht nur materielle Datenträger wie beispielsweise magnetische oder optische Platten oder Bänder, sondern auch immaterielle Datenträger, wie beispielsweise Spannungssignale oder optische Signale mit aufmodulierten Dateninformationen verstanden werden.

In der Wortwahl des vorliegenden Textes soll mit dem Begriff "Initialisierung" vorzugsweise die eingangs genannte Übertragung von Programmen und Daten in eine größere Anzahl von Chipkarten verstanden werden. In anderen Ausgestaltungen der Erfindung ist der Begriff "Initialisierung" jedoch weiter aufzufassen und umfaßt neben der Initialisierung im engeren Sinne auch eine Nachinitialisierung und/oder eine Personalisierung. Als "Initialisierungsdaten" werden im vorliegenden Text nicht nur Daten im engeren Sinne, sondern auch Programme, Programmfragmente und Befehle bezeichnet.

Erfindungsgemäß wird eine Übereinstimmung eines empfangenen Freigabeschlüssels mit einem auf der Chipkarte gespeicherten Freigabeschlüssel überprüft. Unter dem Begriff "Übereinstimmung" ist hierbei vorzugsweise eine Identität der beiden Freigabeschlüssel zu verstehen. In anderen Ausführungsformen der Erfindung kann jedoch auch eine andere Beziehung zwischen den beiden Freigabeschlüsseln gefordert werden. Diese andere Beziehung (z.B., daß die beiden Freigabeschlüssel zueinander komplementär sind) wird in diesen Ausführungsformen als "Übereinstimmung" bezeichnet. Wenn die Übereinstimmung festgestellt wurde, werden die Initialisierungsdaten in einen Speicher, vorzugsweise ein EEPROM oder ein nichtflüchtiges RAM, eingeschrieben.

In bevorzugten Ausführungsformen der Erfindung ist vorgesehen, daß die Initialisierungsdaten nicht im Klartext, sondern als verschlüsselte Initialisierungsdaten übertragen werden. Die zur Entschlüsselung erforderlichen Informationen sind in dem Authentisierungswert enthalten oder aus diesem ableitbar. Diese Informationen bezeichnen einen Ladeschlüssel zur Entschlüsselung der verschlüsselten Initialisierungsdaten. Die verschlüsselte Übertragung der Initialisierungsdaten hat den Vorteil, daß die in diesen Initialisierungsdaten enthaltenen Betriebsgeheimnisse des Chipkartenherstellers sicher gewahrt bleiben. Überdies wird eine gezielte Verfälschung der Initialisierungsdaten noch weiter erschwert.

In bevorzugten Ausgestaltungen der Erfindung beeinflussen ein oder mehrere Initialisierungsparameter, die im Authentisierungswert enthalten sind, das Laden der Initialisierungsdaten (z.B., indem eines von mehreren möglichen Verschlüsselungsverfahren eingestellt wird). Alternativ oder zusätzlich ist in weiteren Ausgestaltungen der Erfindung vorgesehen, daß die Initialisierungsparameter den weiteren Ablauf der Initialisierung und/oder die spätere Funktionsweise der Chipkarte beeinflussen. Beispielsweise kann durch die Initialisierungsparameter eine Auswahl zwischen mehrere im maskenprogrammierten ROM der Chipkarte befindlichen Algorithmen für bestimmte spätere Funktionen der Chipkarte getroffen werden. Durch diese Ausgestaltung vergrößert sich der Anwendungsbereich der Erfindung nochmals erheblich.

Um den Authentisierungswert gegen unbefugte Manipulationen zu schützen, ist in bevorzugten Ausgestaltungen der Erfindung entweder der gesamte Authentisierungswert oder einzelne Teile davon (der Freigabeschlüssel und/oder der Ladeschlüssel und/oder die Initialisierungsparameter) durch eine kryptographische Prüfsumme abgesichert.

In bevorzugten Ausgestaltungen der erfindungsgemäßen Verfahren sowie der erfindungsgemäßen Chipkarte und des erfindungsgemäßen Datenträgers weisen diese Merkmale auf, die den oben beschriebenen oder den in den abhängigen Ansprüchen definierten Merkmalen entsprechen.

Weitere Merkmale, Eigenschaften und Vorteile der Erfindung ergeben sich aus der folgenden Beschreibung eines Ausführungsbeispiels und mehrerer Ausführungsalternativen. In den schematischen Zeichnungen zeigen:
Fig. 1 eine Übersicht über die an dem Gesamtverfahren beteiligten Komponenten und Datenkommunikationswege,
Fig. 2 ein Datenflußdiagramm des Verfahrens zum Erstellen des zur Chipkarteninitialisierung verwendeten Datensatzes, und
Fig. 3 ein Datenflußdiagramm des von der Chipkarte ausgeführten Verfahrens bei der Initialisierung.

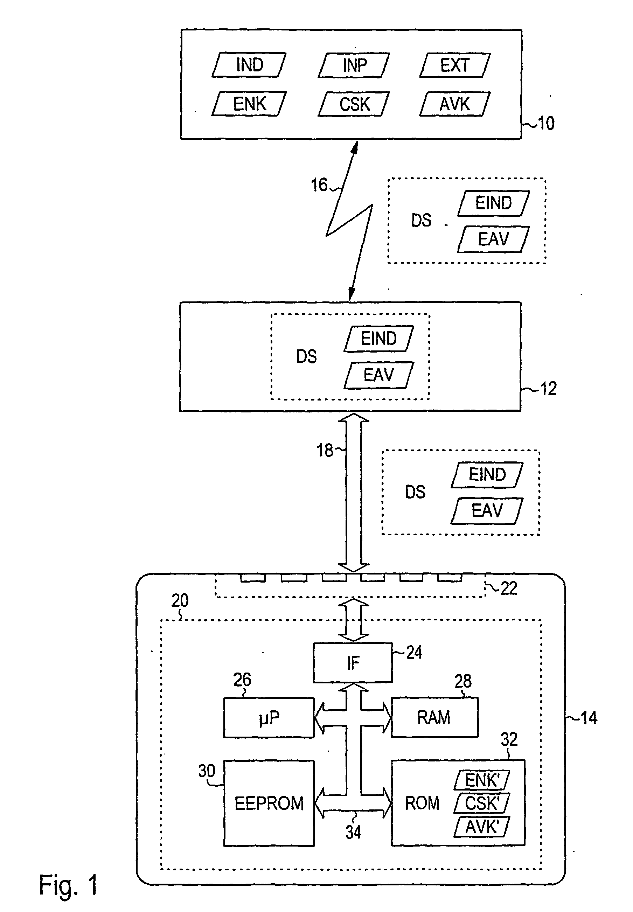

In Fig. 1 sind schematisch eine Herstellerstation 10, eine Bearbeitungsstation 12 und eine Chipkarte 14 gezeigt. Die Herstellerstation 10 ist beim Hersteller der Chipkarte 14 angeordnet, während die Bearbeitungsstation 12 und die Chipkarte 14 sich bei einem externen Partner des Chipkartenherstellers befinden. Zwischen der Herstellerstation 10 und der Bearbeitungsstation 12 besteht eine Datenübertragungsstrecke 16, die beispielsweise als elektronischer Kommunikationsweg über eine Telefonleitung oder auch durch den Austausch von Datenträgern verwirklicht sein kann. Die Chipkarte 14 ist über eine Leitungsverbindung 18 an die Bearbeitungsstation 12 angeschlossen.

Bestandteile der Chipkarte 14 sind ein Halbleiterchip 20 sowie ein Kontaktfeld 22, dessen Kontakte an die Leitungsverbindung 18 angeschlossen sind. Der Halbleiterchip 20 weist in an sich bekannter Weise eine Schnittstellenschaltung 24, einen Mikrocontroller 26, einen Schreib-/ Lese-Speicher 28 (RAM = *random access memory*), einen nichtflüchtigen Speicher 30 und einen maskenprogrammierten Festwertspeicher 32 (ROM = *read only memory*) auf. Der nichtflüchtige Speicher 30 ist im vorliegenden Ausführungsbeispiel als elektrisch löschbarer Speicher (EEPROM = *electrically erasable read only memory*) ausgestaltet. Die genannten Funktionsblöcke des Halbleiterchips 20 sind untereinander durch einen Bus 34 verbunden. Die Schnittstellenschaltung 24 ist überdies an das Kontaktfeld 22 angeschlossen.

Die bisher beschriebene Ausgestaltung der Chipkarte 14 ist an sich bekannt. Es ist ebenfalls bekannt, daß der Festwertspeicher 32 einen vorgegebenen Freigabeschlüssel ENK' aufweist. Die in Fig. 1 gezeigte Chipkarte 14 unterscheidet sich jedoch dadurch vom Stand der Technik, daß ferner ein Prüfsummenschlüssel CSK' und ein Authentisierungswertschlüssel AVK' im maskenprogrammierten Festwertspeicher 32 der Chipkarte 14 vorgesehen sind. Der Authentisierungswertschlüssel AVK' dient zur Entschlüsselung eines unten noch im Detail beschriebenen Authentisierungswertes, während der Prüfsummenschlüssel CSK' zur Integritätsprüfung dieses Authentisierungswertes vorgesehen ist.

Die Herstellerstation 10 hat Zugriff auf die beim Initialisierungsvorgang in die Chipkarte 14 zu übertragenden Initialisierungsdaten IND, die in der Regel sowohl Programmbefehle als auch Datenwerte enthalten. Ferner liegen in der Herstellerstation 10 ein oder mehrere Initialisierungsparameter INP sowie eine Kennung des externen Partner EXT vor. Schließlich weist die Herstellerstation 10 auch Datenwerte für einen Freigabeschlüssel ENK, einen Prüfsummenschlüssel CSK und einen Authentisierungswertschlüssel AVK auf. Diese Werte ENK, CSK und AVK sind identisch zu den in der Chipkarte 14 gespeicherten Werten ENK', CSK' und AVK'.

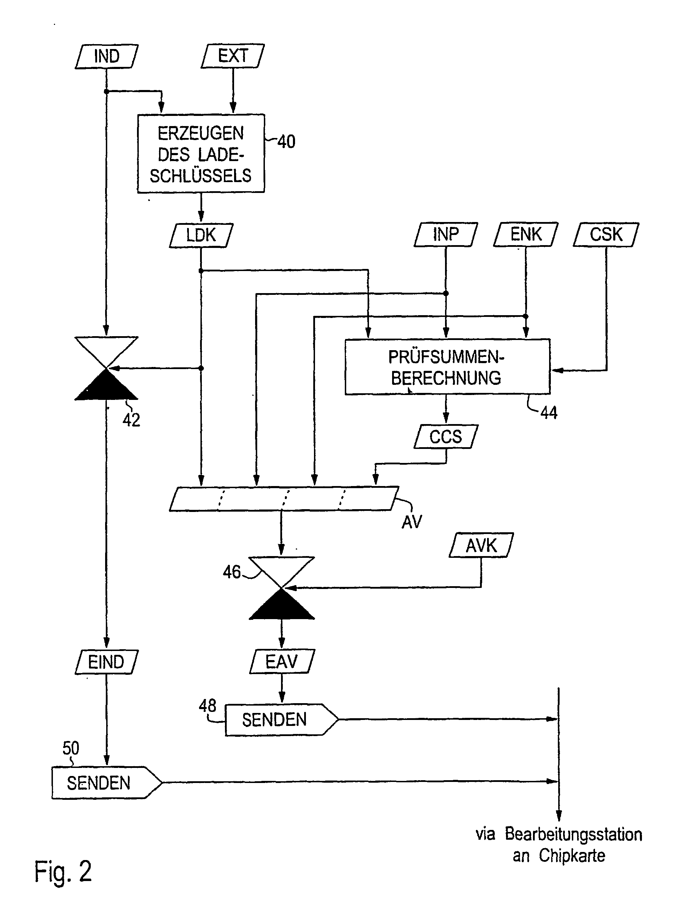

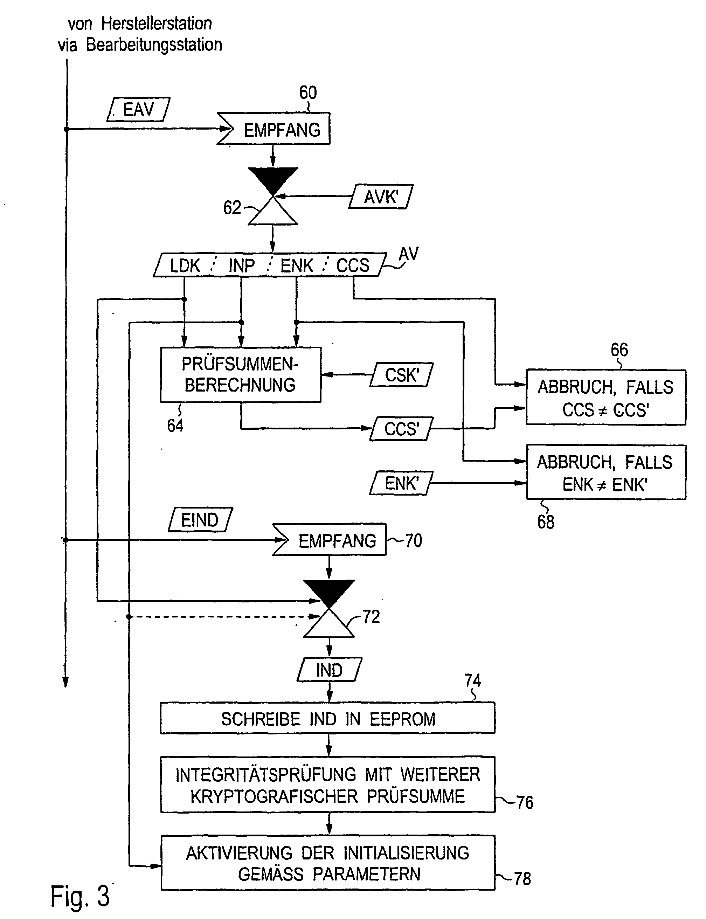

Bei dem Zusammenstellen eines für die Initialisierung benötigten Datensatzes DS führt die Herstellerstation 10 ein Verfahren aus, das in Fig. 2 gezeigt ist und unten noch genauer beschrieben werden wird. Das Ergebnis dieses Verfahrens ist, daß der Datensatz DS verschlüsselte Initialisierungsdaten EIND und einen verschlüsselten Authentisierungswert EAV aufweist. Dieser Datensatz DS wird zur Bearbeitungsstation 12 übertragen und dort zwischengespeichert. Bei der Initialisierung der Chipkarte 14 überträgt die Bearbeitungsstation 12 den Datensatz DS zur Chipkarte 14. Dort werden die empfangenen Daten nach dem in Fig. 3 gezeigten Verfahren ausgewertet, daß ebenfalls unten genauer beschrieben wird.

Das Verfahren gemäß Fig. 2 wird von der Herstellerstation 10 ausgeführt. Es geht von den vorgegebenen Initialisierungsdaten IND aus. Aus diesen Daten und der Kennung des externen Partners EXT wird in Schritt 40 ein Ladeschlüssel LDK erzeugt. Im hier beschriebenen Ausführungsbeispiel ist der Ladeschlüssel LDK ein Zufallswert, der für jedes Paar der Werte IND, EXT neu generiert wird. In Ausführungsaltemativen kann der Ladeschlüssel LDK in Schritt 40 auch nach einem anderen Verfahren berechnet werden.

Der Ladeschlüssel LDK erfüllt mehrere Funktionen. Er dient erstens zur Verschlüsselung der Initialisierungsdaten IND in Schritt 42, um verschlüsselte Initialisierungsdaten EIND zu erhalten. Zweitens ist der Ladeschlüssel LDK eine Komponente eines Authentifizierungswertes AV. Weitere Komponenten des Authentifizierungswertes AV sind ein oder mehrere Initialisierungsparameter INP sowie der Freigabeschlüssel ENK.

Im hier beschriebenen Ausführungsbeispiel wird ferner aus den genannten drei Werten LDK, INP und ENK in Schritt 44 eine kryptographische Prüfsumme CCS berechnet, wobei der Prüfsummenschlüssel CSK als Schlüssel herangezogen wird. Als Algorithmus zur Prüfsummenberechnung wird im vorliegenden Ausführungsbeispiel ein an sich bekannter MAC (*message authentication code;* siehe Kapitel 4.6.4 des bereits zitierten Buches "Handbuch der Chipkarten") nach ISO 9797 eingesetzt, während in Ausführungsalternativen andere Berechnungsverfahren vorgesehen sind. Die kryptographische Prüfsumme CCS sichert die Integrität der im Authentisierungswert AV enthaltenen Daten.

Im hier beschriebenen Ausführungsbeispiel ist der Authentisierungswert AV die Konkatenation der Werte LDK, INP, ENK und der kryptographischen Prüfsumme CCS, während in Ausführungsalternativen andere Verfahren zur Bestimmung des Authentisierungswerts AV eingesetzt werden und der Authentisierungswert AV weitere und/oder andere und/oder weniger Daten enthalten kann.

In einem weiteren Verschlüsselungsschritt 46 wird der Authentisierungswert AV mit dem Authentisierungswertschlüssel AVK verschlüsselt, um einen verschlüsselten Authentisierungswert EAV zu erhalten. Als Verschlüsselungsverfahren kann in Schritt 46 beispielsweise eines der an sich bekannten Verfahren DES (*data encryption standard;* siehe Kapitel 4.6.1 des bereits zitierten Buches "Handbuch der Chipkarten") oder TRIPLE DES eingesetzt werden, und zwar bevorzugt im CBC-Modus (*cipher block chaining*), weil durch diesen Modus die internen Strukturen des Authentisierungswerts AV verborgen werden. In Ausführungsalternativen sind dagegen andere Verschlüsselungsverfahren für Schritt 46 vorgesehen.

In den beiden abschließenden Verfahrensschritten 48 und 50 werden zunächst der verschlüsselte Authentisierungswert EAV und dann die verschlüsselten Initialisierungsdaten EIND an die Bearbeitungsstation 12 gesendet, um dort zwischengespeichert und schließlich an die Chipkarte 14 geleitet zu werden. Die genannten verschlüsselten Daten EAV und EIND bilden zusammen den in Fig. 1 gezeigten Datensatz DS, der in Ausführungsalternativen weitere Komponenten enthalten kann.

Fig. 3 betrifft den Empfang und die Verarbeitung des Datensatzes DS (Fig. 1) durch die Chipkarte 14. In Schritt 60 empfängt die Chipkarte 14 zunächst den verschlüsselten Authentisierungswert EAV, der ursprünglich von der Herstellerstation 10 stammt und an die Bearbeitungsstation 12 übertragen wurde. Der verschlüsselte Authentisierungswert EAV wird in Schritt 62 mit dem im Festwertspeicher 32 der Chipkarte 14 abgelegten Authentisierungswertschlüssel AVK' entschlüsselt, um den Authentisierungswert AV mit den Komponenten LDK, INP, ENK und CCS zu erhalten. Zur Vereinfachung der vorliegenden Beschreibung soll davon ausgegangen werden, daß keine Verfälschung des Datensatzes DS stattgefunden hât, weshalb der in Schritt 62 berechnete Authentisierungswert AV identisch mit dem in Fig. 2 gezeigten Authentisierungswert AV ist.

Wiederum erfolgt eine Prüfsummenberechnung (Schritt 64), bei der aus den Komponenten LDK, INP und ENK unter Verwendung des in der Chipkarte 14 gespeicherten Prüfsummenschlüssels CSK' eine kryptographische Prüfsumme CCS' ermittelt wird. Der Authentisierungswert AV wird als fehlerhaft verworfen, und das Verfahren wird abgebrochen, falls in Schritt 66 eine Abweichung der berechneten Prüfsumme CCS' von der im entschlüsselten Authentisierungswert AV enthaltenen Prüfsumme CCS festgestellt wird.

War die Prüfsummenberechnung erfolgreich, so wird in einem weiteren Schritt 68 der im entschlüsselten Authentisierungswert AV enthaltene Freigabeschlüssel ENK mit dem im maskenprogrammierten Festwertspeicher 32 der Chipkarte 14 abgelegten Freigabeschlüssel ENK' verglichen. Wenn auch dieser Vergleich positiv ausfällt, so wird das weitere Laden der Initialisierung freigegeben; andernfalls wird der Vorgang abgebrochen. In Ausführungsalternativen können die Schritte 66 und 68 auch in anderer Reihenfolge ausgeführt werden.

Bei einer Fortsetzung des Initialisierungsvorgangs empfängt die Chipkarte 14 in Schritt 70 die verschlüsselten Initialisierungsdaten EIND. Diese Daten werden in Schritt 72 entschlüsselt, wobei der Ladeschlüssel LDK des berechneten Authentisierungswerts AV zur Entschlüsselung eingesetzt wird. Das in Schritt 72 angewendete Entschlüsselungsverfahren kann ferner von einem oder mehreren der Initialisierungsparameter INP anhängen; beispielsweise kann je nach dem Parameterwert entweder DES oder TRIPLE DES eingesetzt werden. Natürlich muß das Entschlüsselungsverfahren in Schritt 72 mit dem in Schritt 42 (Fig. 2) zur Verschlüsselung verwendeten Verfahren übereinstimmen. Als Ergebnis des Entschlüsselungsschritts 72 erhält die Chipkarte 14 die Initialisierungsdaten IND, die in Schritt 74 in den nichtflüchtigen Speicher 30 geschrieben werden.

Zur Vereinfachung der Darstellung sind in Fig. 3 die Schritte 70 bis 74 sequentiell dargestellt, während in dem hier beschriebenen Ausführungsbeispiel diese Schritte ineinander verzahnt ablaufen, um den knappen Speicherplatzgegebenheiten der Chipkarte 14 zu genügen.

Nach dem Laden der Initialisierungsdaten IND in den nichtflüchtigen Speicher 30 erfolgt in Schritt 76 auf an sich bekannte Weise eine weitere Integritätsprüfung mittels einer weiteren kryptographischen Prüfsumme. Fällt diese Integritätsprüfung positiv aus, wird die Initialisierung in Schritt 78 aktiviert. Dabei werden im hier beschriebenen Ausführungsbeispiel ein oder mehrere Initialisierungsparameter INP eingesetzt, um die Initialisierung abschließend zu parametrisieren. Beispielsweise kann vorgesehen sein, durch die Initialisierungsparameter INP eine Auswahl unter mehreren im Festwertspeicher 32 befindlichen Algorithmen zur Authentifizierung im GSM-System zu treffen.

## Patentansprüche

1. Verfahren zum Einlesen von Initialisierungsdaten (IND) in eine Chipkarte (14), mit den durch die Chipkarte (14) ausgeführten Schritten:
- Empfangen eines verschlüsselten Authentisierungswerts (EAV),
- Entschlüsseln des verschlüsselten Authentisierungswerts (EAV), um zumindest einen Freigabeschlüssel (ENK) zu erhalten,
- Überprüfen, ob der erhaltene Freigabeschlüssel (ENK) mit einem auf der Chipkarte (14) gespeicherten Freigabeschlüssel (ENK') übereinstimmt,
- falls eine Übereinstimmung der Freigabeschlüssel (ENK, ENK') vorliegt, Empfangen und Einschreiben der Initialisierungsdaten (IND) in einen nichtflüchtigen Speicher (30) der Chipkarte (14),
**dadurch gekennzeichnet, dass**
durch das Entschlüsseln des verschlüsselten Authentisierungswerts (EAV) ferner zumindest ein Ladeschlüssel (LDK) erhalten wird, und die Initialisierungsdaten (IND) als verschlüsselte Initialisierungsdaten (EIND) von der Chipkarte (14) empfangen und dort mit dem Ladeschlüssel (LDK) entschlüsselt werden.

2. Verfahren nach Anspruch 1,
bei dem durch das Entschlüsseln des verschlüsselten Authentisierungswerts (EAV) ferner zumindest ein Initialisierungsparameter (INP) erhalten wird, der den weiteren Einlese- und/oder Initialisierungsvorgang und/ oder die spätere Funktionsweise der Chipkarte (14) beeinflußt.

3. Verfahren nach Anspruch 1 oder Anspruch 2, **dadurch gekennzeichnet, dass**
bei dem der Freigabeschlüssel (ENK) und/ oder der Ladeschlüssel (LDK) und/oder mindestens ein Initialisierungsparameter (INP) durch eine kryptographische Prüfsumme (CCS) abgesichert sind, wobei die kryptographische Prüfsumme (CCS) aus dem Authentisierungswert (AV) ableitbar ist.

4. Chipkarte mit einem Mikrocontroller (26), einem Festwertspeicher (32) und einem nichtflüchtigen Speicher (30), die dazu eingerichtet ist, unter Steuerung des Mikrocontrollers (26) ein Verfahren nach einem der Ansprüche 1 bis 3 auszuführen.

5. Verfahren zum Erzeugen eines Datensatzes (DS) für die Initialisierung einer Chipkarte (14), mit den Schritten:
- Erzeugen eines Ladeschlüssels (LDK),
- Erzeugen eines Authentisierungswerts (AV), aus dem zumindest dieser Ladeschlüssel (LDK) und ein Freigabeschlüssel (ENK) ableitbar ist,
- Verschlüsseln des Authentisierungswerts (AV) mit einem Authentisierungswertschlüssel (AVK), um einen verschlüsselten Authentisierungswert (EAV) zu erhalten,
- Aufnehmen des verschlüsselten Authentisierungswerts (EAV) in den Datensatz (DS), und
- Verschlüsseln der Initialisierungsdaten (IND) mit dem Ladeschlüssel (LDK)
- Aufnehmen der verschlüsselten Initialisierungsdaten (EIND) in den Datensatz (DS).

6. Verfahren nach Anspruch 5,
bei dem der Authentisierungswert (AV) derart erzeugt wird, daß aus ihm ferner zumindest ein Initialisierungsparameter (INP) ableitbar ist, der den späteren Einlese- und/oder Initialisierungsvorgang und/oder die spätere Funktionsweise der Chipkarte (14) beeinflußt.

7. Verfahren nach den Ansprüchen 5 oder 6,
bei dem der Freigabeschlüssel (ENK) und/oder der Ladeschlüssel (LDK) und/ oder der Initialisierungsparameter (INP) im Authentisierungswert (AV) durch eine kryptographische Prüfsumme (CCS) abgesichert sind, wobei der Authentisierungswert (AV) derart erzeugt wird, daß aus ihm die kryptographische Prüfsumme (CCS) ableitbar ist.

8. Computerlesbarer Datenträger mit einem Datensatz (DS), der durch ein Verfahren nach einem der Ansprüche 5 bis 7 erzeugbar ist oder erzeugt worden ist.

9. Verfahren zum Initialisieren einer Chipkarte (14), mit den Schritten:
- Erzeugen eines Datensatzes nach einem Verfahren gemäß einem der Ansprüche 5 bis 7 in einer Herstellerstation (10),
- Übertragen des Datensatzes (DS) zu einer Bearbeitungsstation (12),
- Einlesen des Datensatzes (DS) in die Chipkarte (14) nach einem Verfahren gemäß einem der Ansprüche 1 bis 3.

## Claims

1. A method for reading initialization data (IND) into a chip card (14), having the steps executed by the chip card (14) of:
- receiving an encrypted authentication value (EAV),
- decrypting the encrypted authentication value (EAV) to obtain at least one release key (ENK),
- checking whether the obtained release key (ENK) matches a release key (ENK') stored on the chip card (14),
- if the release keys (ENK, ENK') match, receiving and writing the initialization data (IND) to a nonvolatile memory (30) of the chip card (14),
**characterized in that**
the decryption of the encrypted authentication value (EAV) further obtains at least one load key (LDK), and the initialization data (IND) are received by the chip card (14) as encrypted initialization data (EIND) and decrypted there with the load key (LDK).

2. A method according to claim 1,
wherein the decryption of the encrypted authentication value (EAV) further obtains at least one initialization parameter (INP) which influences the further read-in and/or initialization process and/or the later functionality of the chip card (14).

3. A method according to claim 1 or claim 2,
wherein the release key (ENK) and/or the load key (LDK) and/or at least one initialization parameter (INP) are secured by a cryptographic check sum (CCS), the cryptographic check sum (CCS) being derivable from the authentication value (AV).

4. A chip card having a microcontroller (26), a read-only memory (32) and a nonvolatile memory (30) and set up to execute a method according to any of claims 1 to 3 under the control of the microcontroller (26).

5. A method for generating a record (DS) for initializing a chip card (14), having the steps of:
- generating a load key (LDK),
- generating an authentication value (AV) from which at least said load key (LDK) and a release key (ENK) are derivable,
- encrypting the authentication value (AV) with an authentication value key (AVK) to obtain an encrypted authentication value (EAV),
- incorporating the encrypted authentication value (EAV) into the record (DS), and
- encrypting the initialization data (IND) with the load key (LDK),
- incorporating the encrypted initialization data (EIND) into the record (DS).

6. A method according to claim 5,
wherein the authentication value (AV) is generated so that at least one initialization parameter (INP) is further derivable therefrom which influences the later read-in and/or initialization process and/or the later functionality of the chip card (14).

7. A method according to claims 5 or 6,
wherein the release key (ENK) and/or the load key (LDK) and/or the initialization parameter (INP) are secured in the authentication value (AV) by a cryptographic check sum (CCS), the authentication value (AV) being generated so that the cryptographic check sum (CCS) is derivable therefrom.

8. A computer-readable data carrier having a record (DE) which can be, or has been, generated by a method according to any of claims 5 to 7.

9. A method for initializing a chip card (14), having the steps of:
- generating a record by a method according to any of claims 5 to 7 in a manufacturer station (10),
- transferring the record (DS) to a processing station (12),
- reading the record (DS) into the chip card (14) by a method according to any of claims 1 to 3.

## Revendications

1. Procédé d'introduction de données d'initialisation (IND) dans une carte à puce (14), comportant les étapes exécutées par la carte à puce (14) :
- réception d'une valeur d'authentification cryptée (EAV),
- décryptage de la valeur d'authentification cryptée (EAV), pour obtenir au moins une clé de débridage (ENK),
- contrôle en vue de détecter si la clé de débridage (ENK) obtenue coïncide avec une clé de débridage (ENK') enregistrée sur la carte à puce (14),
- en cas de coïncidence entre les clés de débridage (ENK, ENK'), réception et introduction des données d'initialisation (IND) dans une mémoire (30) non volatile de la carte à puce (14),
**caractérisé en ce que**
par le décryptage de la valeur d'authentification cryptée (EAV), il est fourni en outre au moins une clé de chargement (LDK), et
les données d'initialisation (IND) sont réceptionnées par la carte à puce (14) sous forme de données d'initialisation cryptées (EIND) et y sont décryptées au moyen de la clé de chargement (LDK).

2. Procédé selon la revendication 1, dans lequel le décryptage de la valeur d'authentification cryptée (EAV) permet de fournir en outre au moins un paramètre d'initialisation (INP) qui influence la suite du processus d'introduction et/ou d'initialisation et/ou le mode de fonctionnement ultérieur de la carte à puce (14).

3. Procédé selon la revendication 1 ou 2, **caractérisé en ce que** la clé de débridage (ENK) et/ou la clé de chargement (LDK) et/ou au moins un paramètre d'initialisation (INP) sont sécurisés par une somme de contrôle cryptographique (CCS), la somme de contrôle cryptographique (CCS) pouvant être dérivée de la valeur d'authentification (AV).

4. Carte à puce comportant un microcontrôleur (26), une mémoire morte (32) et un mémoire non volatile (30), qui est conçue pour exécuter, sous le contrôle du microcontrôleur (26), un procédé selon l'une quelconque des revendications 1 à 3.

5. Procédé destiné à générer un jeu de données (DS) pour l'initialisation d'une carte à puce (14), comportant les étapes :
- création d'une clé de chargement (LDK),
- création d'une valeur d'authentification (AV), à partir de laquelle peuvent être dérivées au moins cette clé de chargement (LDK) et la clé de débridage (ENK),
- cryptage de la valeur d'authentification (AV) avec une clé de valeur d'authentification (AVK) pour obtenir une valeur d'authentification cryptée (EAV) ;
- enregistrement de la valeur d'authentification cryptée (EAV) dans le jeu de données (DS), et
- cryptage des données d'initialisation (IND) avec la clé de chargement (LDK),
- enregistrement des données d'initialisation cryptées (EIND) dans le jeu de données (DS).

6. Procédé selon la revendication 5, dans lequel la valeur d'authentification (AV) est générée de telle sorte qu'il est possible en outre de dériver de celle-ci au moins un paramètre d'initialisation (INP), qui influence le processus d'introduction et/ou d'initialisation ultérieur et/ou le mode de fonctionnement ultérieur de la carte à puce (14).

7. Procédé selon la revendication 5 ou 6, dans lequel la clé de débridage (ENK) et/ou la clé de chargement (LDK) et/ou le paramètre d'initialisation (INP) sont sécurisés dans la valeur d'authentification (AV) par une somme de contrôle cryptographique (CCS), la valeur d'authentification (AV) étant générée de telle sorte que la somme de contrôle cryptographique (CCS) peut être dérivée de celle-ci.

8. Support de données, pouvant être lu par un ordinateur, comportant un jeu de données (DS), qui peut être généré ou qui a été généré par un procédé selon l'une quelconque des revendications 5 à 7.

9. Procédé d'initialisation d'une carte à puce (14), comportant les étapes :
- création d'un jeu de donnée par un procédé selon l'une quelconque des revendications 5 à 7, dans un poste de réalisation (10),
- transmission du jeu de données (DS) vers un poste de traitement (12),
- introduction du jeu de données (DS) dans la carte à puce (14) par un procédé selon l'une quelconque des revendications 1 à 3.
